# EUROPEAN PATENT APPLICATION

(11) **EP 0 569 243 A1**
(43) Date of publication of application: **10.11.1993**
(21) Application number: 93303536.2
(22) Date of filing: 07.05.1993
(51) Int. Cl.: G06F 3/033, B60R 16/02

(54) **Control system for devices mounted on vehicle**

(30) Priority: 08.05.1992 JP 116447/92
(71) Applicant: PIONEER ELECTRONIC CORPORATION, Meguro-ku Tokyo-to (JP)
(72) Inventor: Nishida, Junichi, c/o Pioneer Electronic Corp., Oaza-Yamada, Kawagoe-shi, Saitama-ken (JP); Ishida, Tessho, c/o Pioneer Electronic Corp., Oaza-Yamada, Kawagoe-shi, Saitama-ken (JP); Sakaguchi, Masahiko, c/o Pioneer Electronic Corp., Oaza-Yamada, Kawagoe-shi, Saitama-ken (JP); Shinohara, Jun, c/o Pioneer Electronic Corp., Oaza-Yamada, Kawagoe-shi, Saitama-ken (JP); Araki, Morio, c/o Pioneer Electronic Corp., Oaza-Yamada, Kawagoe-shi, Saitama-ken (JP); Ayukai, Yasushiro, c/o Pioneer Electronic Corp., Oaza-Yamada, Kawagoe-shi, Saitama-ken (JP); Nobe, Kenichi, c/o Pioneer Electronic Corp., Oaza-Yamada, Kawagoe-shi, Saitama-ken (JP); Arakawa, Takeharu, c/o Pioneer Electronic Corp., Oaza-Yamada, Kawagoe-shi, Saitama-ken (JP); Baba, Toshiharu, c/o Pioneer Electronic Corp., Oaza-Yamada, Kawagoe-shi, Saitama-ken (JP); Kaneko, Michihiro, c/o Pioneer Electronic Corp., Oaza-Yamada, Kawagoe-shi, Saitama-ken (JP)
(74) Representative: Brunner, Michael John

(57) **Abstract**

A control system (10) for devices mounted on vehicle includes a plurality of controlled devices (51), storage unit (54) for storing a plurality of control programs for controlling each of the plurality of the controlled devices, input unit (11) for selecting controlled devices to be operated from the plurality of controlled devices, and operation control unit (16) for reading application programs respectively associated with controlled devices selected by the input unit from the storage unit and monitoring status of operations of the controlled devices selected by the input unit on the basis of the application programs read from the storage unit so as to simultaneously operate the controlled devices.

## Description

### Field of the Invention:

The present invention relates to a control system for devices mounted on vehicle (hereinafter referred to as "on-vehicle device"), and more particularly to a control system for on-vehicle devices which integrally controls, by means of a single control unit, a plurality of devices, such as a navigation device, a compact disk (CD) player, a tuner and a cassette player.

### Description of the Prior Art:

Recently, various electronic devices have been used as on-vehicle devices. Examples of these on-vehicle devices are audio devices such as CD (Compact Disk) players, DAT (Digital Audio Tape) players and FM/AM tuners, visual devices such as television sets, navigation devices using a GPS (Global Positioning System) or the like. It is possible to operate these devices independently. However, it is desirable to integrally control the devices by means of a single control unit in order to systematically operate the overall system. Further, it is required that on-vehicle devices can be provided in a limited space and can be operated by the driver who is driving the car. From the above point of view, it is desirable to employ a centralized control system using a single control device.

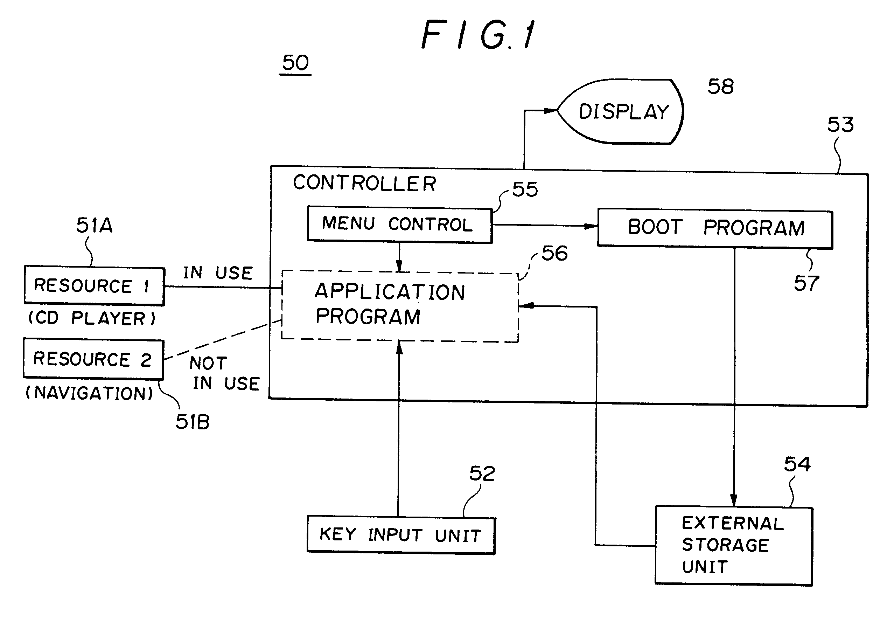

FIG. 1 is a block diagram illustrating an overview of a control system for on-vehicle devices. Referring to FIG. 1, a control system 50 includes devices 51A and 51B to be controlled, a key input unit 52, a controller 53, an external storage device 54 and a display unit 58. The controlled devices 51A and 51B are, for example, audio devices such as CD players, DAT players and FM/AM tuners, visual devices such as television sets, navigation devices using a GPS or the like. Hereinafter, the controlled devices 51A and 51B are referred to as "resources". The key input unit 52 is used to input various kinds of data to the system. The controller 53 selects one of the resources on the basis of input data from the input key unit 52, and performs various controls on the basis of an application program (application software) used to control the selected resource. The external storage device 54 stores application programs associated with the respective resources. The display unit 58 displays various kinds of data and the operation status.

The controller 53 includes a menu controller 55, an application operation controller 56, and a boot controller 57. The menu controller 55 activates the system and the operation of the overall system. The application operation controller 56 operates the application program. The boot controller 57 transfers the application program read from the external storage device 54 in an initial state to the application operation controller 56, and activates the application program.

A description will now be given of the operation of the control system. In the following description, the resources 51A and 51B are a CD player (resource 1) and a navigation device (resource 2), respectively.

First of all, a power supply to the on-vehicle control system 50 is turned ON. The menu controller 55 of the controller 53 activates the overall controller 53, and makes the display 58 represent a menu screen MENU for selecting one of the resources. It will now be assumed that the user looks at the menu screen MENU and selects the CD player 51A by the key input unit 52. The menu controller 55 sends the boot controller 57 an instruction to activate the application program associated with the CD player 51A.

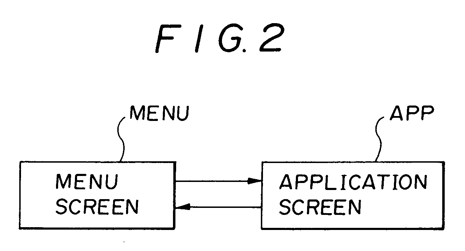

In response to receipt of the instruction, the boot controller 57 transfers the application program associated with the CD player 51A to the application operation controller 56, and activates the application program. The display unit 58 displays an application screen APP associated with the selected application program (see FIG. 2). The application screen APP for use in the CD player represents the number of programs, information indicating how to operate the key input unit 52 for the CD player (for example, information indicating the functions of key switches), and so on. Hence, the system operates as if the controller 53 is used exclusively for the CD player, and the CD player 51A performs a play specified by the user.

When the user wishes to operate the navigation device 51B while the CD player 51A is playing, a menu screen display key (menu key; not shown) mounted on the key input unit 52 is pushed down, and then the menu screen MENU is displayed again. Hence, the display on the display unit 58 is switched from the application screen APP to the menu screen MENU. At the same time as the above switching, the application operation controller 56 terminates the operation of the application program associated with the CD player 51A. As a result, the play of the CD player 51A is interrupted.

Thereafter, the user looks at the menu screen MENU and selects the navigation device 51B by the key input unit 52. The menu controller 55 makes the boot controller 57 activate the application program associated with the navigation device 51B.

The boot controller 7 transfers the application program associated with the navigation device 51B to the application operation controller 56, and activates the selected application program. Hence, the display unit 58 represents an application screen APP related to the application program (see FIG. 2). The application screen APP for use in the navigation device indicates a map, information indicating how to operate the key input unit 52 for the navigation device (for example, information indicating the functions of key switches), and so on. Hence, the system operates as if the controller 53 is used exclusively for the navigation device, and the navigation device 51B performs an operation specified by the user, for example, displays a map desired by the user.

As described above, the display operation on the menu screen MENU corresponds to switching of resources performed when the desired resource is specified. In order to terminate displaying of the application screen APP and display the menu screen MENU, it is necessary to terminate execution of the application program currently selected. In other words, it is impossible to simultaneously use the resources usable independently, such as the CD player and the navigation device. Hence, the resources cannot be efficiently utilized.

It is an object of the present invention to provide a control system for on-vehicle devices, which is capable of simultaneously using resources usable independently.

According to one aspect of the present invention, there is provided a control system for devices mounted on vehicle includes a plurality of controlled devices, storage unit for storing a plurality of control programs for controlling each of the plurality of the controlled devices, input unit for selecting controlled devices to be operated from the plurality of controlled devices, and operation control unit for reading application programs respectively associated with controlled devices selected by the input unit from the storage unit and monitoring status of operations of the controlled devices selected by the input unit on the basis of the application programs read from the storage unit so as to simultaneously operate the controlled devices.

The nature, utility, and further features of this invention will be more clearly apparent from the following detailed description with respect to a preferred embodiment of the invention when read in conjunction with the accompanying drawings briefly described below.
FIG. 1 is a block diagram illustrating an overview of a control system for on-vehicle devices;
FIG. 2 is a diagram showing switching between screens in the control system shown in FIG. 1;
FIG. 3 is a block diagram of an overview of the structure of an embodiment of the present invention;
FIG. 4 is a diagram illustrating a state transition of a menu screen in the embodiment of the present invention;
FIG. 5 is a diagram illustrating an example of display of the menu screen;
FIG. 6 is a block diagram illustrating an overview of the structure of a state monitor/maintenance control processing unit;
FIG. 7 is a flowchart of the operation of a first-resource status maintenance processing unit; and
FIG. 8 is a flowchart of the operation of a second-resource status maintenance processing unit.

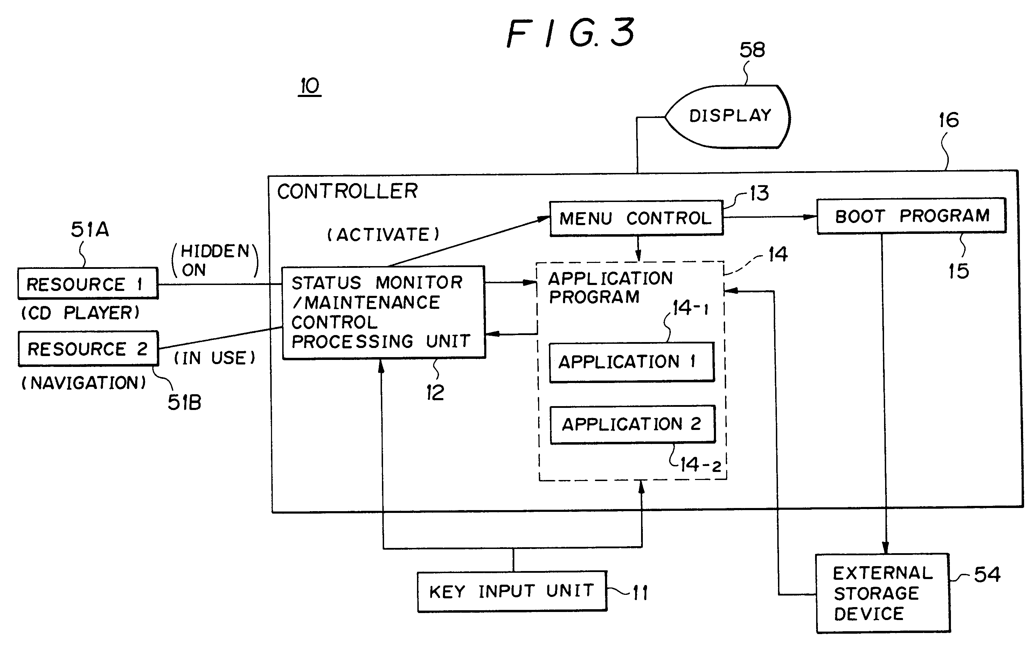

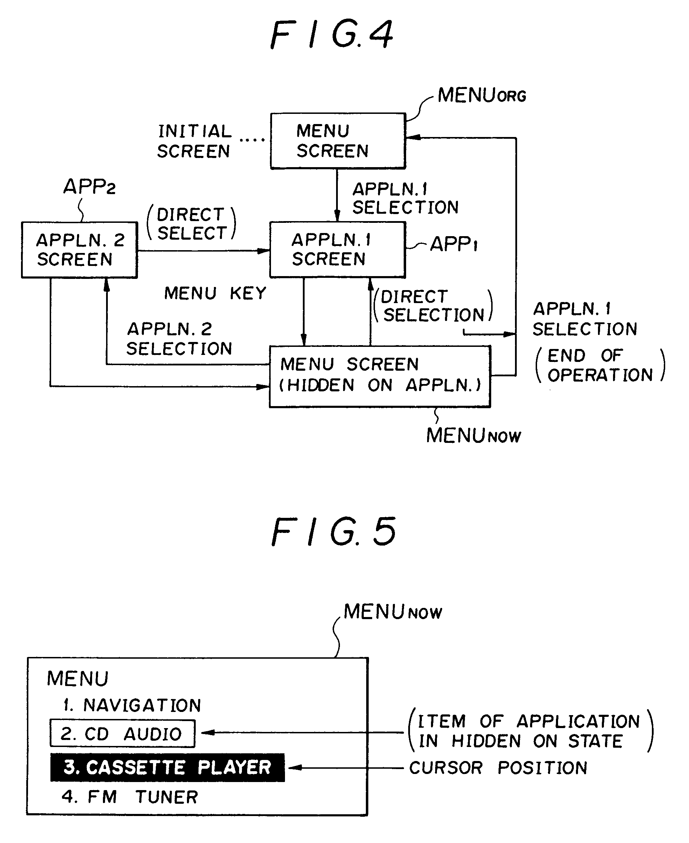

A description will now be given, with reference to FIGS. 3 through 8, of an embodiment of the present invention. In these figures, parts that are the same as those shown in FIG. 1 are given the same reference numbers.

A control system 10 for on-vehicle devices according to the embodiment of the present invention includes a plurality of resources 51A and 51B, a key input unit 11, a controller 16, the external storage device 54 and the display unit 58. The resources 51A and 51B are, for example, audio devices such as CD players, DAT players and FM/AM tuners, visual devices such as television sets, navigation devices using a GPS or the like. The key input unit 11 is used to input various kinds of data to the system. The controller 16 selects two or more resources from among the plurality of resources on the basis of the input data from the input key unit 11, and performs various controls on the basis of an application program or programs (application software) used to control the selected resource or resources. The external storage device 54 stores application programs associated with the respective resources. The display unit 58 displays various pieces of data and the operation status.

The controller 16 includes a status monitor/maintenance control processing unit 12, a menu controller 13, an application operation controller 14, and a boot controller 15. The status monitor/maintenance control processing unit 12 activates the system, and monitors the status of the operation of the plurality of resources. Further, the processing unit 12 simultaneously operates one or more resources. The menu controller 13 performs an operation on the menu screen MENU (see FIG. 2) under the control of the status monitor/maintenance control processing unit 12. The application operation controller 14 operates a plurality of application programs 14₋₁ and 14₋₂. The boot controller 15 transfers one or more application programs read from the external storage device 54 to the application operation controller 14 in an initial mode, and activates the application programs.

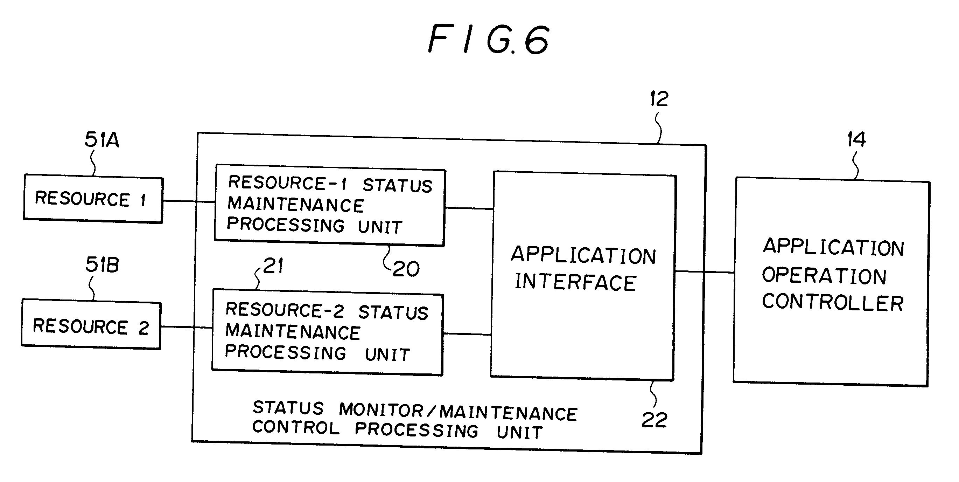

A description will now be given, with reference to FIGS. 6 through 8, of the structure and operation of the status monitor/maintenance control processing unit 12. For the sake of simplicity, the following description relates to a case where two resources are simultaneously operated.

FIG. 6 is a block diagram of the structure of the status monitor/maintenance control processing unit 12. The status monitor/maintenance control processing unit 12 includes a first-resource status maintenance processing unit 20, a second-resource status maintenance processing unit 21 and an application interface 22. The first-resource status maintenance processing unit 20 controls the operation of the first resource 51A. The second-resource status maintenance processing unit 21 controls the operation of the second resource 51B. The application interface 22 performs an interfacing operation between the first-resource status maintenance processing unit 20 or the second-resource status maintenance processing unit 21 and the application operation controller 14.

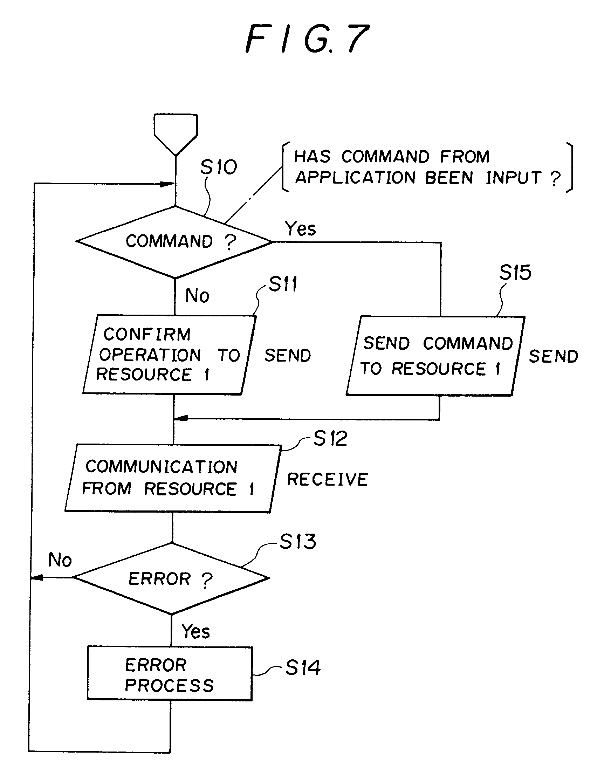

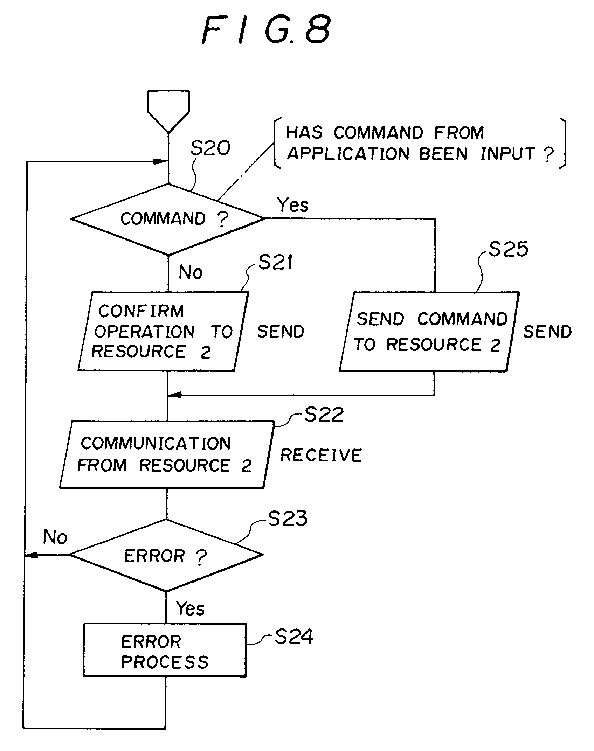

The operation of the status monitor/maintenance control processing unit 12 will now be described with reference to FIGS. 7 and 8. It will be assumed that the status monitor/maintenance control processing unit 12 simultaneously operates the two application programs by executing an interruption process.

FIG. 7 is a flowchart of the operation of the first-resource status maintenance processing unit 20, and FIG. 8 is a flowchart of the operation of the second-resource status maintenance processing unit 21.

The first-resource status maintenance processing unit 20 determines whether or not a command from the application operation controller 14 to the first resource 51A has been inputted via the application interface 22 by the interruption process in step S10.

When it is determined that the command to the first resource 51A has not been inputted, the first-resource status maintenance processing unit 20 sends the first resource 51A an operation confirmation command for confirming the status of the operation of the first resource 51A in step S11. In response to receipt of the operation confirmation command, the first resource 51A sends the first-resource status maintenance processing unit 20 information concerning the operation of the first resource 51A requested by the received command.

Then, the first-resource status maintenance processing unit 20 determines whether or not an error has occurred on the basis of the received information concerning the operation of the first resource 51A in step S13, and performs an error process when an error has occurred in step S14. Then, the process returns to step S10. When it is determined that an error has not occurred in the first resource 51A, the first-resource status maintenance processing unit 20 performs nothing and returns to step S10.

When it is determined, in step S10, that the command to the first resource 51A has been inputted, the first-resource status maintenance processing unit 20 sends the above command to the first resource 51A in step S15. In response to receipt of the above command, the first resource 51A performs the operation related to the command, and sends the first-resource status maintenance processing unit 20 information concerning the result of the operation in step S12.

The first-resource status maintenance processing unit 20 determines, on the basis of the received information concerning the operation, whether or not an error with respect to the command has occurred in step S13. When it is determined that an error has occurred, the first-resource status maintenance processing unit 20 performs an error process in step S14, and returns to step S10 again. When it is determined, in step S13, that no error has occurred, the first-resource status maintenance processing unit 20 does not perform anything, and returns to step S10.

In parallel with the above operation of the first-resource status maintenance processing unit 20, the second status maintenance processing unit 21 determines whether or not a command from the application operation controller 14 to the second resource 51B has been inputted via the application interface 22 by the interruption process in step S20.

When it is determined, in step S20, that no command to the second resource 51B has been inputted, the second-resource status maintenance processing unit 21 sends the second resource 51B an operation confirmation command for confirming the status of the operation of the second resource 51B in step S21. In response to receipt of the operation confirmation command, the second resource 51B sends the second-resource status maintenance processing unit 21 information concerning the operation of the second resource 51B requested by the received command.

The second-resource status maintenance processing unit 21 determines whether or not an error has occurred on the basis of the received information concerning the operation of the second resource 51B in step S23, and performs an error process when an error has occurred in step S24. Then, the process returns to step S20. When it is determined that an error has not occurred in the second resource 51B, the second-resource status maintenance processing unit 21 performs nothing and returns to step S20.

When it is determined, in step S20, that the command input to the second resource 51B has been inputted, the second-resource status maintenance processing unit 21 sends the above command to the second resource 51B in step S25. In response to receipt of the above command, the second resource 51B performs the operation related to the command, and sends the second-resource status maintenance processing unit 21 information concerning the result of the operation in step S22.

Then, the second resource status maintenance processing unit 21 determines, on the basis of the received information concerning the operation, whether or not an error with respect to the command has occurred in step S23. When it is determined that an error has occurred, the second-resource status maintenance processing unit 21 performs an error process in step S24, and executes step S20 again. When it is determined, in step S23, that no error has occurred, the second-resource status maintenance processing unit 21 does not perform anything, and returns to step S20.

As described above, according to the embodiment of the present invention, it is possible to simultaneously operate the two resources in parallel with each other by the interruption process and to efficiently utilize the resources.

A description will now be given of the concrete operation of the on-vehicle control system. In the following description, the first resource 51A is a CD player (serving as "resource 1"), and the second resource 51B is a navigation device (serving as "resource 2").

First, a power supply to the on-vehicle control system 50 is turned ON. The status monitor/maintenance control processing unit 12 of the controller 16 activates the overall controller 53, and makes the display unit 58 represent a menu screen MENU_{ORG} for selecting one or more resources. It will now be assumed that the user looks at the menu screen MENU_{ORG} and selects the CD player 51A by the key input unit 52. The menu controller 55 sends the boot controller 15 an instruction to activate the application program corresponding to the CD player 51A.

In response to receipt of the instruction, the boot controller 15 transfers the application program 14₋₁ associated with the CD player 51A to a predetermined area of a memory (not shown) in the application operation controller 14, and activates the application program 14₋₁. The display unit 58 displays an application screen APP₁ associated with the selected application program 14₋₁ (see FIG. 2). The application screen APP for use in the CD player indicates the number of programs, information indicating how to operate the key input unit 52 for the CD player (for example, information indicating the functions of key switches), and so on. Hence, the system operates as if the controller 53 is used exclusively for the CD player, and the CD player 51A performs a play specified by the user.

When the user wishes to operate the navigation device 51B while the CD player 51A is playing, a menu screen display key (menu key; not shown) mounted on the key input unit 52. Hence, the status monitor/maintenance control processing unit 12 sends the menu controller 13 the command for displaying the menu screen on the display unit 58. Hence, the display on the display unit 58 is switched from the application screen APP₁ to a menu screen MENU_{NOW}. As shown in FIG. 5, the menu screen NEMU_{NOW} indicates the resources so that the resources which are operating are visually distinguishable from the resources which are not operating. For example, the resources (the CD player: CD AUDIO) which are operating are indicated with a display color different from a display color with which the resources which are not operating are indicated. In the example shown in FIG. 5, the indication of the CD player which is operating is shown so that it is surrounded by a block. A state in which one or more resources previously selected are simultaneously operating is referred to as a "hidden ON state".

The user refers to the menu screen MENU_{NOW}, and operates a cursor key (not shown) of the key input unit 11 so that the cursor moves to the indication of the navigation device 51B (a reverse indication in FIG. 5). Hence, the menu controller 55 sends the boot controller 15 a command to activate an application program 14₋₂ associated with the navigation device 51B. In response to receipt of the command, the boot controller 15 transfers the application program 14₋₂ associated with the navigation device 51B to a memory area in the application operation controller 14 different from that for the application program 14₋₁, and activates the application program 14₋₂. Hence, an application screen APP₂ for the application program 14₋₂ for the navigation device 51B is displayed on the display unit 58 (see FIG. 2). The application screen APP₂ for use in the navigation device indicates a map, information indicating how to operate the key input unit 11 for the navigation device (for example, information indicating the functions of key switches), and so on. Hence, the system operates as if the controller 16 is used exclusively for the navigation device, and the navigation device 51B performs an operation specified by the user, for example, displays a map desired by the user.

The status monitor/maintenance control processing unit 12 controls the application operation controller 14 so that the application program 14₋₁ for the CD player 51A is simultaneously running. Hence, reproduced sounds are being output via a speaker (not shown) in the hidden ON state.

According to the embodiment of the present invention, the status monitor/maintenance control processing unit is provided between the application software and the resources, and is capable of maintaining the operating status of the previously selected one or more resource. As a result, a plurality of resources operable independently can be simultaneously operated and can be efficiently utilized. In this case, it is possible to directly switch the display from the application screen APP₂ to the application screen APP₁ and directly switch the display from the menu screen MENU_{NOW} to the menu screen MENU_{ORG}.

In the above-mentioned embodiment, two resources are simultaneously operated. Further, more than two resources can be simultaneously operated in the same manner as described above.

According to the present invention, it is possible to independently operate a plurality of controlled devices (resources) by means of an operation control means and hence to efficiently utilize the resources in the on-vehicle control system.

The invention may be embodied in other specific forms without departing from the spirit of essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A control system (10) for devices mounted on vehicle comprising:
a plurality of controlled devices (51),
storage means (54) for storing a plurality of control programs for controlling each of the plurality of the controlled devices;
input means (11) for selecting controlled devices to be operated from the plurality of controlled devices; and
operation control means (16) for reading application programs respectively associated with controlled devices selected by said input means from the storage means and monitoring status of operations of the controlled devices selected by said input means on the basis of the application programs read from said storage means so as to simultaneously operate the controlled devices.

2. A control system according to claim 1, wherein said operation control means monitors a selection of controlled device by interruption process when at least one controlled device is being operated.

3. A control system according to claim 1, wherein said operation control means comprising a plurality of sub-control means (14, 20, 21) for respectively monitoring and operating each one of said controlled devices and interface means (22) for interfacing said sub-control means with each other.

4. A control system according to claim 1, further comprising display means (58) for indicating the controlled devices currently operated.

5. A control system according to claim 4, wherein said display means indicates the newly selected controlled device in a manner being distinguished from the controlled device which has been operated prior to the selection of the new controlled device.
